# EUROPEAN PATENT APPLICATION

(11) **EP 3 462 428 A1**
(43) Date of publication of application: **03.04.2019**
(21) Application number: 17194035.6
(22) Date of filing: 29.09.2017
(51) Int. Cl.: G08G 1/14, B62D 15/02, G07B 15/02

(54) **PARKING FLUX ESTIMATION**

(71) Applicant: Deutsche Telekom AG, 53113 Bonn (DE)
(72) Inventor: LAWRENSON, Matthew John, 1030 Bussigny (CH); NOLAN, Julian Charles, 1009 Pully (CH); JAKUBEK, Sascha, 50858 Köln (DE)
(74) Representative: Vossius & Partner Patentanwälte Rechtsanwälte mbB

(57) **Abstract**

A system for determining the parking flux of vehicles at one or more parking locations, the system comprising: a receiver unit to receive gathered data from one or more vehicles being parked at the parking location; a parking signature database for storing parking signature data that is used to identify an occurrence of a parking event; a data comparison algorithm configured to use the gathered data as an input to compare with the parking signature data so as to determine if the parking event has occurred; a parking variation database for storing parking variation data identified to be parking event; a parking flux determination algorithm configured to use the parking variation data to calculate a parking flux metric; and a transmitter unit to receive instructions from a user and to provide parking flux metric to the user of the system.

## Description

The present invention relates to a parking flux determination system for determining the parking flux of vehicles at one or more parking locations and methods thereof.

In general, the parking affects both the users of vehicles and the general population.

When planning a journey, the location of a car park and time to park a vehicle can be important considerations. This is especially the case in populated areas where parking occupancy tends to be high.

Furthermore, parking of a vehicle is often chargeable, either by the owner of a parking location or by a government body, so the cost of parking may also be an important consideration for the vehicle's owner or user.

Additionally, the user may wish to combine their vehicle journey with the use of public transport, so again the location of parking and time to park may well be important considerations.

A final consideration is that parking can be frustrating to the user, with most drivers agreeing that it is one of the least pleasurable parts of a journey.

Furthermore, since all vehicles cause pollution at some level, hence increased vehicle use whilst finding parking potentially contributes to the degradation of the environment. By having a clearer view of the parking situation at their destination, a vehicle driver can make choices that reduce the environmental impact of their journey.

Moreover, as with the previous example, if the user is able to conveniently combine a vehicle journey with the use of public transport then they have additional options to reduce their environmental impact.

Further, modern vehicles contain a wide variety of sensors used for guidance during parking or driver assist type applications. Examples include proximity sensors, parking cameras and potentially even Light Detection and Ranging (LIDAR) and Radio Detection And Ranging (RADAR).

In addition, vehicles may have other sensors such as vibration sensors or microphones used to monitor various aspects of the vehicle, but which could also be used for secondary purposes.

Recent developments in smartphones include the capability to '3D map' the device's local environment. These applications use a variety of sensors, some similar to those described above found on vehicles. Examples of projects include Google's Project Tango and Intel's RealSense.

To sum it up, there is a lack of information available to either a driver, or a navigation system to allow choices to be made as to the optimum parking solution to use as part of a journey and how to measure the rate of change of parking space occupancy.

Accordingly, the present invention is directed to a system for determining the parking flux of vehicles at one or more parking locations and methods thereof that substantially obviates one or more of the above problems.

To achieve the above objects and according to an aspect of the present invention, there is provided a system for determining the parking flux of vehicles at one or more parking locations, the system comprising: a receiver unit to receive gathered data from one or more vehicles being parked at the parking location; a parking signature database for storing parking signature data that is used to identify an occurrence of a parking event; a data comparison algorithm configured to use the gathered data as an input to compare with the parking signature data so as to determine if the parking event has occurred; a parking variation database for storing parking variation data identified to be parking event; a parking flux determination algorithm configured to use the parking variation data to calculate a parking flux metric; and a transmitter unit to receive instructions from a user and to provide parking flux metric to the user of the system.

The system may further comprise a parking situation database for storing parking situation data of the parking location.

The parking situation data may include a calculation on parking utilization in the parking location.

The parking flux determination algorithm may be configured to use the parking situation data as input to calculate the parking flux metric.

The parking signature data in the parking signature database may include a measurement and a tolerance to which the gathered data is compared. The measurement may include (i) a distance between the vehicle and other vehicle, and/or (ii) an expected range of speeds between the vehicle and other vehicle, and/or (iii) a size of the other vehicle.

The parking signature may include a null event to differentiate a non-parking event from the parking event.

The parking variation data may include a place, and/or time, and/or date of the parking event.

According to another aspect of the present invention, there is provided a vehicle for data collection, the data for use in the system above, comprising: a plurality of sensors for gathering data representing a vicinity of the vehicle; a controller configured to initiate the gathering of data by the sensors when the vehicle is being parked, wherein the controller is configured to gather data when the engine of the vehicle is off, a communication unit to send the gathered data; and a user interface to receive instructions from a user and to display a parking flux metric based on the instruction of the user.

The sensors may be proximity sensors and the gathered data may be a proximity data.

According to a further aspect of the present invention, there is provided a method for collecting data on parking events of vehicles at one or more parking locations, comprising: a) gathering data from a plurality of sensors on a vehicle being parked in one of the parking locations; b) using the gathered data as an input and comparing it to parking signature data of said parking location in a parking signature database; wherein the parking signature database stores parking signature data that is used to identify an occurrence of a parking event; wherein when a match of the parking event exists, creating a parking variation data and storing the parking variation data in a parking variation database.

The parking signature data in the parking signature database may include a measurement and a tolerance to which the gathered data is compared. The measurement may include (i) a distance between the vehicle and other vehicle, and/or (ii) an expected range of speeds between the vehicle and other vehicle, and/or (iii) a size of the other vehicle.

The gathered data may be a proximity data relating to when other vehicles are parked in proximity to the vehicle.

The parking signature data may include a null event to differentiate a non-parking event from the parking event.

The gathered data may include a place, and/or time, and/or date of the parking event when the parking event occurred.

The gathered data may be gathered for a number of seconds at set increments of time, preferably 5 seconds every 10 minutes.

According to another aspect of the present invention, there is provided a method to provide a user with choices of vacant parking spaces in one or more parking locations, comprising: extracting, for a parking location, a parking variation data from a parking variation database and/or a parking situation data from a parking situation database; using the parking variation data and/or the parking situation data as input in calculating a parking flux metric for the parking location, wherein calculating the parking flux metric includes calculating a rate of change of vehicles in the parking location; and displaying the parking flux metric to the user via a user interface.

The parking variation data may be data identified to be parking events of vehicles.

The parking situation data may include a calculation on parking utilization in the parking location.

The extracting of parking variation data may be set for (i) a period of time, or (ii) a variable period of time dependent on an expected variability of the parking location, or (iii) a specific parking location.

The rate of change of the parking in the parking location may include a probability that the vehicles leave the parking location after a set period of time; and/or an average time the vehicles are parked in the parking location; and/or a percentage of the vehicles that leave the parking location in a set period of time.

Sensors within a vehicle may be used to gather data relating to when other vehicles park in proximity to the vehicle (e.g. in front of, behind, to the side of etc.).

This data may then be optionally combined with other similar data collected by other users in the same parking location, and used to calculate an estimation of the 'parking flux', which is a measure of the rate of change of vehicles parked in a certain location. This gives extra information compared to the known methods of measuring parking occupancy.

This data may then be either presented to a user directly, or combined with other data prior to display.

In another preferred embodiment, an alternate solution is presented whereby a user's mobile device may be used to provide data that can then be used to estimate the rate of change of parking within the parking location.

According to the above-described system, vehicle and/or methods, the present invention has the advantageous effect of allowing a driver to better understand the potential situation at their destination parking location. In addition, other data ascertained from the eParkomat™ system will also be available to the driver, thus the driver will know the likelihood of people leaving their parking lot, and be able to better gauge the likelihood of finding a parking lot within a certain time.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic of a system according to an embodiment of the present invention;
FIG. 2a is a schematic of the Data Collection process according to an embodiment of the present invention;
FIG. 2b is a schematic of the Parking Flux Determination and Display Process according to an embodiment of the present invention; and
FIG. 3 illustrates a parking location that has arrivals and departures.

In the following description, the terminologies described below are defined in consideration of functions in the present invention. However, the elements of the present invention should not be limited by the terminologies used in the specification of the present invention. That is, such terminologies will be used only to differentiate one element from other elements of the present invention.

Thus, the term "Parking Location" refers to a geographical zone containing parking spaces. Examples of Parking Locations include streets that contain areas where drivers can legally park, a car park or an area of ground where parking takes place. A Parking Location typically contains a plurality of Parking Spaces.

The term "a Parking Space" refers to the individual spaces within a Parking Location where a vehicle can be parked.

The term "Parking Event" refers to the action of a vehicle either arriving and locating at a Parking Space or a vehicle leaving a Parking Space.

The term "Parking Signature" refers to a set of data that indicates that a Parking Event is taking place. This may include proximity data gathered by proximity sensors mounted on a second vehicle that monitors the second vehicle's proximity to a first vehicle as the first vehicle either enters a Parking Space or leaves a Parking Space.

The term "Parking Situation" refers to data relating to the estimated parking occupancy at a given Parking Location, the Parking Situation is described using the "Parking Situation Data" being a metric that provides a quantified measure of the Parking Situation.

The term "Parking Flux" refers to data relating to the rate of change of parking in a given Parking Location. The Parking Flux is described using a metric (the "Parking Flux Metric"), being a metric that provides a quantified measure of the Parking Flux.

The term "Enhanced Parking Situation": in optional embodiments the Parking Situation Data and Parking Flux Metric may be combined to give a set of data that provides information about both, defined here as the "Enhanced Parking Situation Data".

Hereinafter, a system for determining the parking flux of vehicles at one or more parking locations according to exemplary embodiments of the present invention will be described in detail with reference to the accompanying drawings.

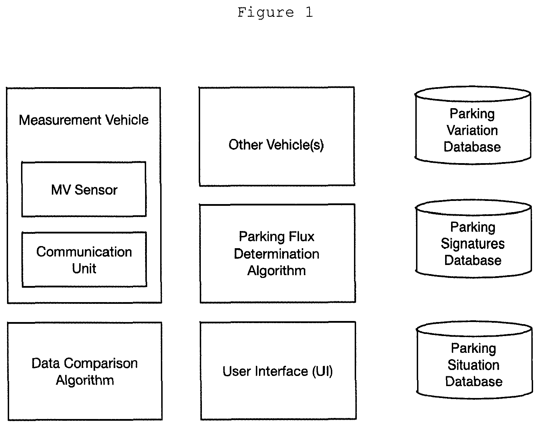

FIG. 1 is a schematic illustrating a system according to an embodiment of the present invention.

Referring to FIG. 1, the system, according to the embodiment of the present invention may comprise a measurement vehicle. The measurement vehicle may include a Sensor (the measurement vehicle sensor, "MV Sensor") that is able to sense data (the "Sensed Data"). Examples of MV Sensors may include Proximity sensors ('parking sensors'), LIDARs, RADARs, and/or Camera with depth sensing capability. The measurement vehicle may further include apparatus and method to get the sensed data from the vehicle to the system (the "Communication Unit"). This may be achieved through a wireless communication protocol such as Bluetooth, or a hardware connection such as On-board diagnostics Parameter IDs (OBDII).

The system may further comprise vehicles (the "Other Vehicles") that come and go from the Parking Location, where the parking or leaving of the Other Vehicle is a Parking Event.

The system may further comprise a database (the "Parking Signature Database"), storing data that can be used as a 'Parking Signature' to identify the occurrence of a Parking Event. In some embodiments, Parking Events may be divided into classes, for example arriving/leaving a Parking Space. Here an individual Parking Space may be identified using existing localization methods, such as those based on satellites like GPS, or techniques based on the mobile network triangulation may be used by the smart phone and/or car system in combination with much more precise triangulation of the planed narrow band internet of things (NBIoT).

If NBIoT is used, then since NBIoT will use existing UMTS devices, a Communication Unit can be used that also contains this functionality i.e. that is able to use new capabilities of the network (800MHz Band 20 and 900MHz Band 8) as outlined by the 3GPP standardization body.

The system may further comprise a database (the "Parking Variation Database"), storing data (the "Parking Event Data") relating to Parking Events, for example the fact a Parking Event took place, the time/data of a Parking Event, weather when the Parking Event took place etc. or Sensed Data collected when a Parking Event took place. Where Parking Signatures have classes the classes associated with a Parking Event may also be stored in the Parking Signature Database.

The system may further comprise an algorithm (the "Data Comparison Algorithm"), being an algorithm that takes Sensed Data as an input and compares it to Parking Signatures to determine whether a Parking Event has taken place.

The system may further comprise an algorithm (the "Parking Flux Determination Algorithm"), being an algorithm that takes Parking Event Data as an input and calculates a Parking Flux Metric at a certain Parking Location

The system may further comprise a user interface (the "UI") being apparatus to gather information from a user and to display information to the user.

The system may further comprise a database (the "Parking Situation Database), storing information relating to the current Parking Situation, i.e. Parking Situation Data.

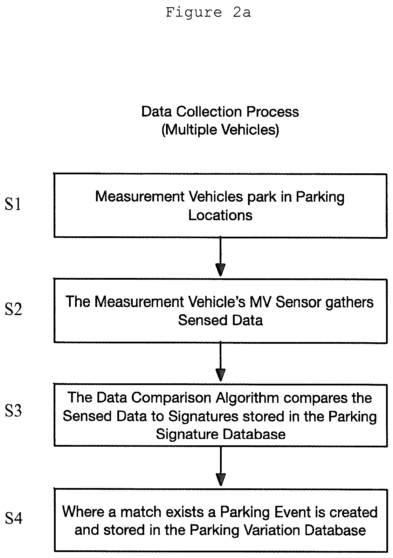

FIG. 2a is a schematic of the Data Collection process according to an embodiment of the present invention.

Referring to FIG. 2a, the data collection process according to the embodiment of the present invention may involve multiple vehicles collecting Parking Event Data for a certain Parking Location. In the context of the application it is envisaged that the Measurement Vehicles used will be vehicles owned/used by eParkomat™ users, and will form a portion rather than the whole of vehicles parked in that location.

An example of the Data Collection Process is as follows: In Step S1, Measurement Vehicles are parked at a Parking Location. During the time the Measurement Vehicles are parked, their MV Sensors gather Sensed Data (Step S2). For example, the Sensed Data may be proximity data from a number of proximity (parking) sensors around the vehicle that collect data showing the distance to the nearest object. Depending on embodiment the Sensed Data may be continuously gathered, or the sensors may gather data in accordance to a schedule, or upon a trigger.

An example where a schedule is used may be where Sensed Data is gathered for a number of seconds at set increments of time, for example for 5 seconds every 10 minutes.

An example where a trigger is used is where a single sensor (e.g. one of the MV Sensors themselves, or another sensor such as a microphone) senses a first signal (for example a vibration is sensed by a microphone) and this signal triggers the MV Sensors to turn on. If a sensor other than an MV Sensor is used this would need to be included in the System and have a method to communicate with the System, and in any case an additional process would be required to control the trigger operation.

In Steps S3 and S4, the Data Comparison Algorithm takes the Sensed Data as an input and compares this to stored data in the Parking Signatures Database, and where a positive match is found the associated Parking Event is stored in the Parking Variation Database. An example of how a match may be found is as follows.

A Parking Signature includes data that matches the measurements expected when an Other Vehicle parks next to the Measurement Vehicle, this includes (i) measurements describing the distance of the Other Vehicle to the Measurement Vehicle, (ii) the expected range of relative speeds between the Other Vehicle and Measurement Vehicle (including the fact that the Other Vehicle Stops) and data relating to the size of the Other Vehicle (i.e. measurements from multiple MV Sensors, which are spatially separated across the Measurement Vehicle should match, indicating that the measured objects' size is of the order of a vehicle etc. For example:
i. A Measurement Vehicle has 4 MV Sensors, in this case proximity sensors, one on each corner of the vehicle - with sensors 1 and 2 on one side and 3 and 4 on the opposite side.
ii. When one pair of sensors, e.g. 1 and 2, show a change in proximity settings equivalent to those described in a Parking Signature, and then the Sensed Data shows those proximity settings remaining static for a given period of time, indicating the vehicle is stationary it is assumed an "Other Vehicle" has parked next to the Measurement Vehicle.

The 'signature' in the Parking Signature Database may include a measurement and tolerance to which the Sensed Data may be compared, the signatures may also include the required set of sensors needed to make a measurement valid (here Sensed Data is taken from sensors 1 and 2, indicating a vehicle has parked alongside the Measurement Vehicle, data combined from sensors 1 and 4 (i.e. diagonally opposite sensors) would not be indicative of a Parking Event.

Multiple Parking Signatures may be available, including those able to detect Parking Events on either side of the Measurement Vehicle, or in front of or behind the Measurement Vehicle.

Also, some 'null' events may also have signatures that help the system to differentiate non-parking events from parking events, for example signals that are brief in nature may be filtered out, such as those equivalent to the driver walking away from the vehicle, or a pedestrian walking next to the vehicle.

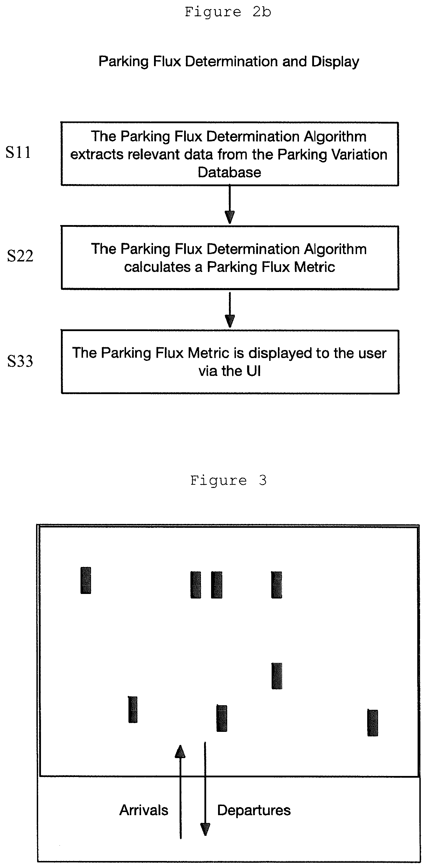

FIG. 2b is a schematic of the Parking Flux Determination and Display Process according to an embodiment of the present invention. Referring to FIG. 2b, an example of the the Parking Flux Determination and Display Process is illustrated as follows.

First of all, a user indicates that he intends to park in a certain Parking Location.

In Step S11, the Parking Flux Determination Algorithm may extract relevant data from (a) or (a) and (b) below:
a. The Parking Event data from the Parking Variation Database. Depending on embodiment this may be for a set period of time, for example the last 10 minutes, or it may be for a variable period of time dependent on (i) the expected variability of the Parking Location (i.e. where higher variability of Parking Flux is expected then a shorter time period is selected, or (ii) type of Parking Location (i.e. some Parking Locations mean shorter durations are used, for example where greater accuracy is needed).
b. Data from the Parking Situation Database:
   i. The estimated Parking Utilization for a given Parking Location
   ii. Which other users have parked their vehicles in the Parking Location.

In Step S12, the Parking Flux Determination Algorithm then calculates the Parking Flux Metric. An example of the parking flux metric can be calculated by:
the net number of additions per minute of parked vehicles within the location - (number of vehicles added in time period - number of vehicles leaving in time period)/time period.

Various metrics that describe the 'flux' or rate of change of parking in a location are possible, for example:
aa. The probability that a parked vehicle will leave the Parking Location after a certain period of time.
bb. The average time a vehicle is parked in the Parking Location.
cc. The percentage of vehicles that leave a Parking Location in a set time-period.

Various methods can be used to calculate the Parking Flux Metric, for example if the Parking Flux Metric is a measure of the probability a vehicle will park for a given length of time, then a possible method to calculate this is as follows:
aaa. The vehicles parked within a given Parking Location that are contributing the Sensed Data are identified through querying the Parking Situation Database (these vehicles are defined as the "Contributing Vehicles").
bbb. When a Parking Event is detected, the data for each of the Contributing Vehicles is compared to ensure that each Parking Event is only counted once.
ccc. Parking Event data is organized to show when a vehicle has (i) first parked and (ii) left, and hence to determine the duration of the stay.
ddd. This data is then binned and the cumulative count for each bin is plotted as shown as PE in Table 1:

**Table 1**

| **Minute from:** | **Minute to:** | | **MV** | **PE** | | **PE/MV** |
|---|---|---|---|---|---|---|
| 1 | 5 | | 20 | 30 | | 1.50 |
| 5 | 10 | | 17 | 40 | | 2.35 |
| 10 | 15 | | 14 | 50 | | 3.57 |
| 15 | 20 | | 10 | 20 | | 2.00 |
| 20 | 25 | | 4 | 5 | | 1.25 |
| 25 | 30 | | 1 | 1 | | 1.00 |

The number of Measuring Vehicles that gathered the data is also recorded (see MV in Table 1). The ratio PE/MV then gives an estimation of average duration of a vehicle stay in that Parking Location.

It can readily be seen that variations in this metric, such as the average time a vehicle is parked can be calculated. In addition, if the data from the Parking Situation Database is also used (which includes the predicted occupancy of a Parking Location, and potentially the amount of traffic in a given area) then the average time a driver has to wait to park can also be estimated.

In Step S13, the Parking Flux Metric is displayed to the user via the user interface (UI).

To give an example, a parking location is considered that has arrivals and departures (considered "Parking Events") as illustrated in Fig. 3.

According to an example of the invention, the number of arrivals and departures is estimated by the system, giving the following data:

**Table 2**

| Minute | Arrivals | Leavers | | Vehicles in parking location |
|---|---|---|---|---|
| 1 | 1 | 0 | | 1 |
| 2 | 1 | 0 | | 2 |
| 3 | 3 | 1 | | 4 |
| 4 | 4 | 3 | | 5 |
| 5 | 1 | 3 | | 5 |
| 6 | 1 | 1 | | 3 |
| 7 | 2 | 0 | | 5 |
| 8 | 1 | 1 | | 5 |
| 9 | 2 | 0 | | 7 |
| 10 | 1 | 1 | | 7 |

This can be re-organized as:

**Table 3**

| Arrival | Minute |
|---|---|
| 1 | 1 |
| 2 | 2 |
| 3 | 3 |
| 4 | 3 |
| 5 | 3 |
| 6 | 4 |
| 7 | 4 |
| 8 | 4 |
| 9 | 4 |
| 10 | 5 |
| 11 | 6 |
| 12 | 7 |
| 13 | 7 |
| 14 | 8 |
| 15 | 9 |
| 16 | 9 |
| 17 | 10 |

and

**Table 4**

| Departure | Minute |
|---|---|
| 1 | 3 |
| 2 | 4 |
| 3 | 4 |
| 4 | 4 |
| 5 | 5 |
| 6 | 5 |
| 7 | 5 |
| 8 | 6 |
| 9 | 8 |
| 10 | 10 |

Hence using a formula: Vehicle Stay Duration = (departure minute of arriverᵢ - arrival minute of leaverᵢ +1), it can be calculated:

**Table 5**

| Arrival/Leave Event | Parking Space Occupation Duration |
|---|---|
| 1 | 3 |
| 2 | 3 |
| 3 | 2 |
| 4 | 2 |
| 5 | 3 |
| 6 | 2 |
| 7 | 2 |
| 8 | 3 |
| 9 | 5 |
| 9 | 6 |

The '+1' is an approximation that it is included the full minute, as that is the granularity of the measurement. If more accuracy is desired, an amount of seconds can be added instead. The 'i' just indicates the order of arrival and leaving - so, for example, arriver 3 is the third vehicle to arrive, and leaver 3 is the third vehicle to leave - but it is not necessary the same vehicle.

The Arrival/Leave Event Duration is in effect a measure of the time a parking space is occupied. This is an example of a Parking Event 'PE'. These Arrival/Leave Event Duration can be binned - Table 6 below gives an example where bins are made for every 5 minutes of duration.

**Table 6**

| Minute from: | Minute to: | | PE |
|---|---|---|---|
| 1 | 5 | | 30 |
| 6 | 10 | | 40 |
| 11 | 15 | | 50 |
| 16 | 20 | | 20 |
| 21 | 25 | | 5 |
| 26 | 30 | | 1 |

To have a flux one would like to have a 'rate of change'. If one knew the total number of spaces available then it could be worked out, for example, the percentage change - so in the example above if there were 100 spaces then 30% will become free in 5 minutes.

The example in the ID was for a more 'rough' estimation where the number of available spaces is not known, so an approximation is used by counting the number of Measuring Vehicles ('MV'), with more MVs indicating a larger space. This has the advantage that it can be used in cases where no knowledge of the area if available, but of course is less accurate.

The actual definition of Parking Flux is open, many different ways are available to calculate it, the above are just examples of this.

Various preferred embodiments are available, for example:

The data embodied in the Parking Flux Metric may be visually presented to the user alongside the data reflecting the Parking Situation, for example, for a given Parking Location the Parking Situation Metric may be displayed using a red/yellow/green colouring scheme, with red indicating high occupancy, yellow intermediate occupancy and green indicating good availability of parking. This may be in the forms of lines that follow the contours of roads. The edges of the coloured lines could then have a second colouring, perhaps again red/yellow/green, but this time the colours indicate the Parking Flux Metric.

The Main Embodiment calculates the 'current' Parking Flux Metric and provides this to the user, however a preferred embodiment could continually calculate the Parking Flux Metric, and also collect other data, such as the time, date, weather, local events etc. and use this to predict the Parking Flux Metric at a future time. For example, if it is known that the Parking Flux Metric typically increases by 10% between 08:00 and 08:20 then an estimated value for 08:20 could be calculated at 08:00 and provided to the user at that time, useful if for example the user was starting their journey at 08:00 and wished to make a choice of Parking Location at that time.

Another preferred embodiment may use Sensed Data from a mobile device rather than from a Measurement Vehicle. For example is a mobile device contains sensors able to 'scan' the local environment and gather a 3D map (examples being Google's 'Project Tango', or Intel's 'RealSense') then as a user walks past parked vehicles they could assess the distance between the vehicles. As well as the distance between the device and vehicles, which if combined with the trajectory of the user can provide data indicating the 'protrusion' of the parked vehicle. Where this remains the same it can be assumed the vehicles have remained parked, where it changes it can be assumed a Parking Event has taken place.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A parking flux determination system for determining the parking flux of vehicles at one or more parking locations, the system comprising:
a receiver unit to receive gathered data from one or more vehicles being parked at the parking location;
a parking signature database for storing parking signature data that is used to identify an occurrence of a parking event;
a data comparison algorithm configured to use the gathered data as an input to compare with the parking signature data so as to determine if the parking event has occurred;
a parking variation database for storing parking variation data identified to be parking event;
a parking flux determination algorithm configured to use the parking variation data to calculate a parking flux metric; and
a transmitter unit to receive instructions from a user and to provide parking flux metric to the user of the system.

2. The system according to claim 1, further comprising
a parking situation database for storing parking situation data of the parking location.

3. The system according to claim 1 or 2, further comprising
wherein the parking situation data includes a calculation on parking utilization in the parking location.

4. The system according to any one of claims 1 to 3,
wherein the parking flux determination algorithm is further configured to use the parking situation data as input to calculate the parking flux metric.

5. The system according to any one of claims 1 to 4,
wherein the parking signature data in the parking signature database includes a measurement and a tolerance to which the gathered data is compared, and
wherein the measurement includes (i) a distance between the vehicle and other vehicle, and/or (ii) an expected range of speeds between the vehicle and other vehicle, and/or (iii) a size of the other vehicle.

6. The system according to any one of claims 1 to 5,
wherein the parking signature includes a null event to differentiate a non-parking event from the parking event, and/or wherein the parking variation data includes a place, and/or time, and/or date of the parking event.

7. A vehicle for data collection, the data for use in the system according to any one of claims 1 to 6, comprising:
a plurality of sensors for gathering data representing a vicinity of the vehicle;
a controller configured to initiate the gathering of data by the sensors when the vehicle is being parked, wherein the controller is configured to gather data when the engine of the vehicle is off,
a communication unit to send the gathered data; and
a user interface to receive instructions from a user and to display a parking flux metric based on the instruction of the user.

8. A method for collecting data on parking events of vehicles at one or more parking locations, comprising:
a) gathering data (S2) from a plurality of sensors on a vehicle being parked in one of the parking locations;
b) using the gathered data as an input and comparing it to parking signature data of said parking location in a parking signature database (S3);
wherein the parking signature database stores parking signature data that is used to identify an occurrence of a parking event;
wherein when a match of the parking event exists, creating a parking variation data and storing the parking variation data in a parking variation database (S4).

9. The method according to claim 8,
wherein the parking signature data in the parking signature database includes a measurement and a tolerance to which the gathered data is compared; and
wherein the measurement includes (i) a distance between the vehicle and other vehicle, and/or (ii) an expected range of speeds between the vehicle and other vehicle, and/or (iii) a size of the other vehicle.

10. The method according to claim 8 or 9,
wherein the gathered data is a proximity data relating to when other vehicles are parked in proximity to the vehicle, and/or wherein the parking signature data includes a null event to differentiate a non-parking event from the parking event.

11. The method according to any one of claims 8 to 10,
wherein the gathered data includes a place, and/or time, and/or date of the parking event when the parking event occurred.

12. A method to provide a user with choices of vacant parking spaces in one or more parking locations, comprising:
extracting (S11), for a parking location, a parking variation data from a parking variation database and/or a parking situation data from a parking situation database;
using the parking variation data or the parking variation data and the parking situation data as input in calculating a parking flux metric for the parking location,
wherein calculating (S12) the parking flux metric includes calculating a rate of change of vehicles in the parking location; and
displaying (S13) the parking flux metric to the user via a user interface.

13. The method according to claim 12,
wherein parking variation data is data identified to be parking events of vehicles.

14. The method according to claim 12 or 13,
wherein the parking situation data includes a calculation on parking utilization in the parking location.

15. The method according to any one of claims 12 to 14,
wherein the extracting of parking variation data is set for (i) a period of time, or (ii) a variable period of time dependent on an expected variability of the parking location, or (iii) a specific parking location.

## Amended claims

### Amended claims in accordance with Rule 137(2) EPC.

1. A parking flux determination system for determining the parking flux of vehicles at one or more parking locations, the system comprising:
a receiver unit configured to receive gathered data from one or more vehicles that are parked at the parking location;
a parking signature database configured to store parking signature data that is used to identify an occurrence of a parking event,
wherein the parking signature data is a set of data that indicates that the parking event is taking place;
a data comparison algorithm configured to use the gathered data as an input to compare with the parking signature data so as to determine if the parking event has occurred;
a parking variation database for storing parking variation data identified to be parking event;
a parking flux determination algorithm configured to use the parking variation data to calculate a parking flux metric; and
a transmitter unit configured to receive instructions from a user and to provide parking flux metric to the user of the system,
wherein the parking flux is a measure of the rate of change of vehicles parked in the one or more parking locations;
wherein the parking flux metric is a quantified measure of the parking flux; and
wherein the parking event is an action of a vehicle either arriving and locating at a parking space or a vehicle leaving a parking space.

2. The system according to claim 1, further comprising
a parking situation database for storing parking situation data of the parking location.

3. The system according to claim 1 or 2, further comprising the system being configured to use the parking situation data for a calculation on parking utilization in the parking location.

4. The system according to any one of claims 1 to 3,
wherein the parking flux determination algorithm is further configured to use the parking situation data as input to calculate the parking flux metric.

5. The system according to any one of claims 1 to 4,
wherein the parking signature data in the parking signature database includes a measurement and a tolerance to which the gathered data is compared, and
wherein the measurement includes (i) a distance between the vehicle and other vehicle, and/or (ii) an expected range of speeds between the vehicle and other vehicle, and/or (iii) a size of the other vehicle.

6. The system according to any one of claims 1 to 5,
wherein the parking signature includes a null event to differentiate a non-parking event from the parking event, and/or wherein the parking variation data includes a place, and/or time, and/or date of the parking event.

7. A vehicle for data collection, the data for use in the system according to any one of claims 1 to 6, comprising:
a plurality of sensors configured to gather data representing a vicinity of the vehicle;
a controller configured to initiate the gathering of data by the sensors when the vehicle is being parked, wherein the controller is configured to gather data when the engine of the vehicle is off,
a communication unit configured to send the gathered data; and
a user interface configured to receive instructions from a user and to display a parking flux metric based on the instruction of the user.

8. A method for collecting data on parking events of vehicles at one or more parking locations, comprising:
a) gathering data (S2) from a plurality of sensors on a vehicle that is parked in one of the parking locations;
b) using the gathered data as an input and comparing it to parking signature data of said parking location in a parking signature database (S3);
wherein the parking signature database stores parking signature data that is used to identify an occurrence of a parking event,
wherein the parking signature data is a set of data that indicates that the parking event is taking place;
wherein when a match of the parking event exists, creating a parking variation data and storing the parking variation data in a parking variation database (S4);
wherein the parking event is an action of a vehicle either arriving and locating at a parking space or a vehicle leaving a parking space.

9. The method according to claim 8,
wherein the parking signature data in the parking signature database includes a measurement and a tolerance to which the gathered data is compared; and
wherein the measurement includes (i) a distance between the vehicle and other vehicle, and/or (ii) an expected range of speeds between the vehicle and other vehicle, and/or (iii) a size of the other vehicle.

10. The method according to claim 8 or 9,
wherein the gathered data is a proximity data relating to when other vehicles are parked in proximity to the vehicle, and/or wherein the parking signature data includes a null event to differentiate a non-parking event from the parking event.

11. The method according to any one of claims 8 to 10,
wherein the gathered data includes a place, and/or time, and/or date of the parking event when the parking event occurred.

12. A method to provide a user with choices of vacant parking spaces in one or more parking locations, the method for use in the system according to any one of claims 1 to 6, the method comprising:
extracting (S11), for the parking location, a parking variation data from a parking variation database and/or a parking situation data from a parking situation database;
using the parking variation data or the parking variation data and the parking situation data as input in calculating a parking flux metric for the parking location,
wherein calculating (S12) the parking flux metric includes calculating a rate of change of vehicles in the parking location; and
displaying (S13) the parking flux metric to the user via a user interface,
wherein a parking variation database stores parking variation data identified to be parking event; and
wherein the parking event is an action of a vehicle either arriving and locating at a parking space or a vehicle leaving a parking space.

13. The method according to claim 12,
wherein parking variation data is data identified to be parking events of vehicles.

14. The method according to claim 12 or 13, further comprising the method using
the parking situation data for a calculation on parking utilization in the parking location.

15. The method according to any one of claims 12 to 14,
wherein the extracting of parking variation data is set for (i) a period of time, or (ii) a variable period of time dependent on an expected variability of the parking location, or (iii) a specific parking location.
